# EUROPEAN PATENT APPLICATION

(11) **EP 1 220 484 A2**
(43) Date of publication of application: **03.07.2002**
(21) Application number: 01310860.0
(22) Date of filing: 24.12.2001
(51) Int. Cl.: H04L 1/00

(54) **Transmitting/receiving system**

(30) Priority: 27.12.2000 JP 2000397646
(71) Applicant: MATSUSHITA ELECTRIC INDUSTRIAL CO., LTD., Kadoma-shi, Osaka 571-8501 (JP)
(72) Inventor: Kondou, Juni, Akaikemachi Ooazaak, Aike 399-125 (JP); Maki, Masahiro, Ooaza Kawashima 75-102 (JP); Oomoto, Masao, Ooazaikawa 444-1-302 (JP); Igata, Yuji, Utukishigaokakita 2C, Home 3-22 (JP)
(74) Representative: Collingwood, Anthony Robert

(57) **Abstract**

Each band-pass unit of a second transmitting/receiving apparatus includes a band-pass means and a receiving quality detection means. The respective band-pass means have different passbands. The receiving quality detection means detects receiving quality information of a signal that has passed through the band-pass means. A receiving quality control means generates a receiving quality control signal based on the receiving quality information. The receiving quality control signal is a signal which becomes a basis for controlling the electric energy level of a signal transmitted by a first transmitting/receiving apparatus. The first transmitting/receiving apparatus adjusts the level of the signal transmitted in each passband.

## Description

### BACKGROUND OF THE INVENTION

### Field of the Invention

The present invention relates to a transmitting/receiving system for carrying out data transmission.

### Description of the Related Art

In communications using a transmission method in which transmission characteristics significantly deteriorate due to distortion and noise, a method is employed, wherein a transmitter generates a spread spectrum signal and carries out transmission by occupying a bandwidth which is broader in terms of the frequency axis than the transmission rate.

By employing a broad occupied band as such, even if transmission characteristics deteriorate in some regions of the band, transmission can still be carried out utilizing energy in other areas of the band.

A receiver selects a received signal from each of the subbands having different passbands and synthesizes the received signals thus taken out, thereby carrying out data decoding.

A general subband synthesizing method is disclosed in Japanese Unexamined Patent Publication No. Hei-7-66751, for example. In this subband synthesizing method, the received quality is judged for each subband and selective synthesis is performed.

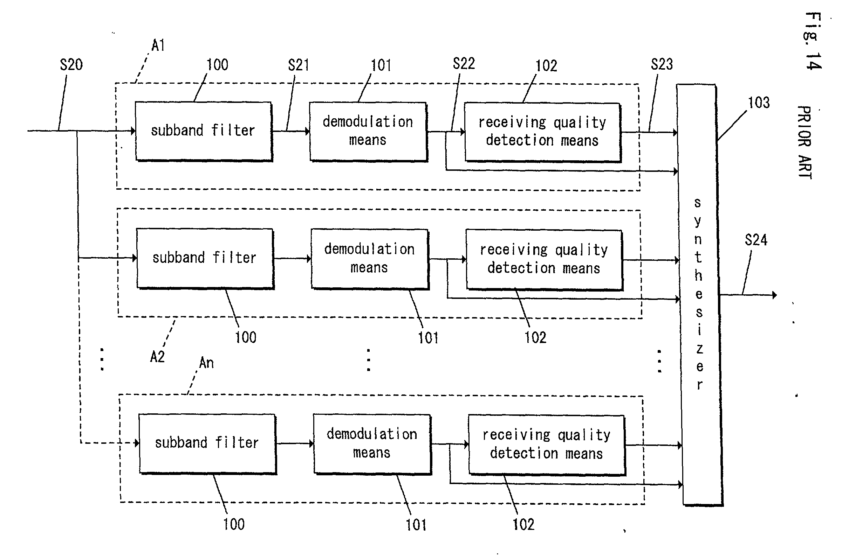

Referring to Fig. 14, a prior subband receiving apparatus realizes the above subband synthesizing method. This subband receiving apparatus comprises a plurality of band-pass units A1-An and a synthesizer 103. Each of the respective band-pass units A1-An includes a subband filter 100, a demodulation means 101, and a receiving quality detection means 102.

A received signal S20 is fed in parallel to a plurality of subband filters 100. The respective subband filters 100 allow signals having different frequency bands to pass. The outputs of the subband filters 100 are signals S21 limited to the bandwidths and frequencies to which their respective subband filters 100 are tuned. The signals S21 are applied to inputs of respective demodulation means 101. The demodulation means 101 demodulate signals S21 to generate demodulated data S22. The demodulated data S22 is applied to inputs of the synthesizer 103.

The receiving quality detection means 102 perform error detection on the channels of demodulated data S22 received from the respective demodulation means 101. The receiving quality detection means 102 each produces an error detection information S23 which is applied to inputs of the synthesizer. The synthesizer 103 judges the quality of the signal in each passband based on the error detection information S23. Then, the synthesizer 103 selectively synthesizes the demodulated data S22 of each passband in accordance with the judgement results and generates receiving data S24.

However, in the prior-art subband receiving unit, when the amount of distortion and noise on the transmission path is large and line characteristics significantly deteriorate, the receiving quality may deteriorate in all passbands in the receiving portion and it may become difficult to correctly decode the transmitted data.

In addition, in bands where line characteristics have significantly deteriorated and data decoding is impossible, carrying out transmitting and receiving processing using unnecessary energy may interfere with other bands, thereby causing errors in selectively synthesized receiving data.

### OBJECTS AND SUMMARY OF THE INVENTION

It is an object of the present invention to provide a transmitting/receiving system and method which reduces deterioration of the receiving quality and provides a transmitting/receiving system wherein high quality communications is realized.

A transmitting/receiving system according to a first aspect of the invention comprises first and second transmitting/receiving apparatuses which mutually carry out transmissions and receptions, wherein the second transmitting/receiving apparatus includes a plurality of band-pass means having different passbands for a signal which has been received from the first transmitting/receiving apparatus. A plurality of receiving quality detection means which are provided in response to the band-pass means and detect receiving quality information of a signal which has passed through the corresponding band-pass means, and a receiving quality control means which generates, based on the receiving quality information provided by the plurality of receiving quality detection means, a receiving quality control signal for each passband, wherein the receiving quality control signal is a signal which provides a basis for controlling the level of a signal transmitted by the first transmitting/receiving apparatus, and the first transmitting/receiving apparatus adjusts, based on the receiving quality control signal which has been transmitted by the second transmitting/receiving apparatus, the level of a signal to be transmitted for each passband.

According to this construction, the first transmitting/receiving apparatus can transmit a signal at an appropriate level in which the receiving quality in the second transmitting/receiving apparatus is taken into consideration. As a result, deterioration in the receiving quality ofthe second transmitting/receiving apparatus is reduced.

In a transmitting/receiving system according to a second aspect of the invention, in addition to the first aspect of the invention, the receiving quality information is at least one of bit errors and signal level.

According to this construction, the receiving quality in the second transmitting/receiving apparatus is properly judged and the first transmitting/receiving apparatus is enabled to transmit a signal on a more appropriate level. As a result, deterioration in the receiving quality in the second transmitting/receiving apparatus is further reduced.

In a transmitting/receiving system according to a third aspect of the invention, in addition to the first aspect of the invention, the receiving quality control means uses the receiving quality information as the receiving quality control signal.

According to this construction, compared to the case where a receiving quality control signal having different content from the receiving quality information is generated, the receiving quality control means is simplified.

In a transmitting/receiving system according to a fourth aspect of the invention, in addition to the first aspect of the invention, the receiving quality control means includes an electric energy control signal generating means for generating an electric energy control signal which adjusts the electric energy level of a signal to be transmitted by the first transmitting/receiving apparatus for each passband. This electric energy control signal is the receiving quality control signal.

According to this construction, the first transmitting/receiving apparatus can use the content of the receiving quality control signal to be transmitted by the second transmitting/receiving apparatus without modification and then adjust the electric energy level of the signal to be transmitted.

In a transmitting/receiving system according to a fifth aspect of the invention, in addition to the first aspect of the invention, the receiving quality control means includes an electric energy amount information generating means for generating an amount of electric energy information concerning the amount of electric energy-designating value of each passband that the second transmitting/receiving apparatus demands from a signal transmitted by the first transmitting/receiving apparatus. This amount of electric energy information is the receiving quality control signal.

According to this construction, the first transmitting/receiving apparatus can transmit a signal which satisfies the amount of electric energy-designating value demanded by the second transmitting/receiving apparatus. As a result, the receiving quality in the second transmitting/receiving apparatus is made satisfactory.

In a transmitting/receiving system according to a sixth aspect of the invention, in addition to the first aspect of the invention, the receiving quality control means includes an error rate of receiving data-measuring means for measuring the error rate of receiving data, which is the ratio of error bits contained in receiving data per unit time, for each passband. A signal representing this error rate of receiving data is the receiving quality control signal.

According to this construction, the first transmitting/receiving apparatus can, in addition to the first or second invention, generate a signal to be transmitted while taking the error rate of receiving data of the second transmitting/receiving apparatus into consideration. As a result, receiving errors in the second transmitting/receiving apparatus are reduced.

In a transmitting/receiving system according to a seventh aspect of the invention, in addition to the first aspect of the invention, the receiving quality control means includes a number of error bits in a receiving-measuring means for measuring the number of error bits in receiving, which is the number of error bits per unit time, for each passband. A signal representing this number of error bits in receiving is the receiving quality control signal.

According to this construction, the first transmitting/receiving apparatus can generate a signal to be transmitted with the number of error bits of the second transmitting/receiving apparatus taken into consideration. As a result, receiving errors in the second transmitting/receiving apparatus are reduced.

In a transmitting/receiving system according to an eighth aspect of the invention, in addition to the first aspect of the invention, the first transmitting/receiving apparatus comprises a modulation means for applying a modulation according to the characteristics of a transmission way. The second transmitting/receiving apparatus includes a demodulation means which is conformable to the modulation means.

According to this construction, the first transmitting/receiving apparatus can transmit a signal which is not easily adversely affected by the transmission way.

In a transmitting/receiving system according to a ninth aspect of the invention, in addition to the first aspect of the invention, the first transmitting/receiving apparatus comprises a modulation means. A multi-carrier method is employed as a modulation method in this modulation means. The second transmitting/receiving apparatus includes a demodulation means which is conformable to the modulation means.

In such a multi-carrier method, if the SN ratio deteriorates in some bands, only signals in the deteriorated bands cannot be demodulated but signals in non-deteriorated bands is demodulated.

Therefore, with respect to bands where deterioration in the receiving quality of the second transmitting/receiving apparatus is not improved even though the first transmitting/receiving apparatus adjusts the level of the signal to be transmitted based on the receiving quality control signal, the first transmitting/receiving apparatus can reduce or stop output in these bands of the signal to be transmitted.

As a result, interference to other systems due to unnecessary energy output is reduced. Also, electric power consumption ofthe transmitting/receiving system is reduced. Finally, saturation of analog stages of the amplifier is also reduced.

In a transmitting/receiving system according to a tenth aspect of the invention, in addition to the first aspect of the invention, the first transmitting/receiving apparatus comprises a modulation means. A spread spectrum method is employed as a modulation method in this modulation means. The second transmitting/receiving apparatus includes a demodulation means which is conformable to the modulation means.

In such a spread spectrum method, even when the SN ratio deteriorates in some bands, as long as the SN ratio remains satisfactory in other bands, demodulation is possible.

Therefore, with respect to bands where deterioration in the receiving quality ofthe second transmitting/receiving apparatus is not improved even though the first transmitting/receiving apparatus adjusts the level of the signal to be transmitted based on the receiving quality control signal, the first transmitting/receiving apparatus can reduce or stop the output of signal to be transmitted in those bands.

As a result, interference to other systems due to unnecessary energy output is reduced, electric power consumption of the transmitting/receiving system is reduced, and prevention of saturation of analog stages of the amplifier is obtained.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1 is a block diagram of the transmitting/receiving system according to Embodiment 1 of the invention.
Fig. 2 is an exemplary diagram of passbands of the band-pass means.
Fig. 3 is a constructional diagram of the signal S7 to be transmitted to the transmitting/receiving apparatus which carries out transmitting electric energy control.
Fig. 4 is a block diagram of the transmitting/receiving system according to Embodiment 2 of the invention.
Fig. 5 is a block diagram of the transmitting/receiving system according to Embodiment 3 of the invention.
Fig. 6 is a block diagram of the transmitting/receiving system according to Embodiment 4 of the invention.
Fig. 7 is a block diagram of the transmitting/receiving system according to Embodiment 5 of the invention.
Fig. 8 is a block diagram of the transmitting/receiving system according to Embodiment 6 of the invention.
Fig. 9 is a block diagram of the transmitting/receiving system according to Embodiment 7 of the invention.
Fig. 10 is a block diagram of the transmitting/receiving system according to Embodiment 8 of the invention.
Fig. 11 is an exemplary diagram of the signal S 1 obtained by applying a multi-carrier modulation and transmitting electric energy control.
Fig. 12 is a block diagram of the transmitting/receiving system according to Embodiment 9 of the invention.
Fig. 13 is an exemplary diagram of the signal S 1 obtained by applying a spread spectrum modulation and transmitting electric energy control.
Fig. 14 is a block diagram of the prior subband receiving unit.

### DETAILED DESCRIPTION OF THE PREFERRED EMBODIMENTS

### (Embodiment 1)

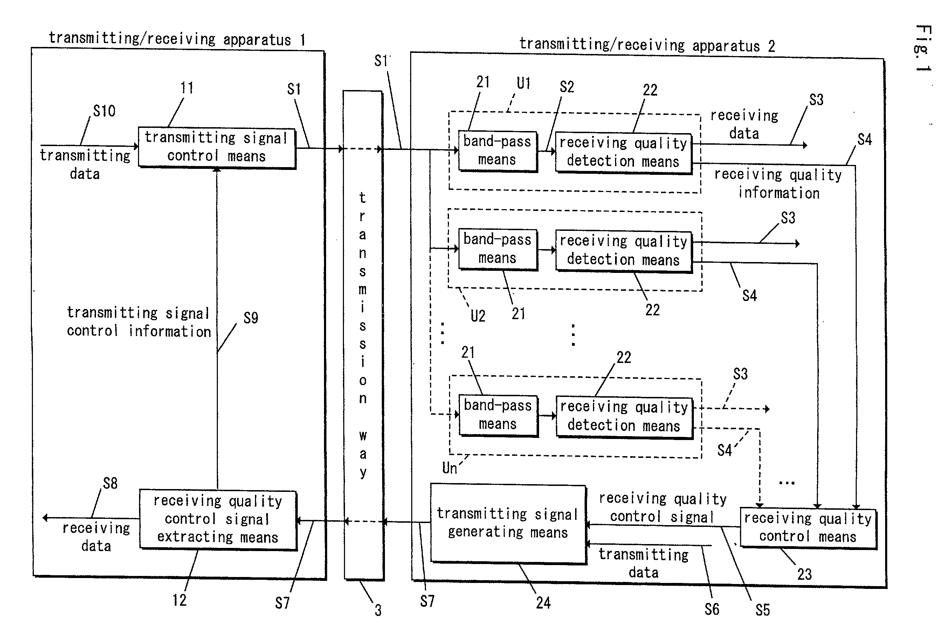

Referring to Fig. 1, a transmitting/receiving system according to Embodiment 1 of the invention includes transmitting/receiving apparatuses 1 and 2. The transmitting/receiving apparatus 1 includes a transmitting signal control means 11 and a receiving quality control signal-extracting means 12. The transmitting/receiving apparatus 2 includes a plurality of band-pass units U1-Un, a receiving quality control means 23, and a transmitting signal generating means 24. Each of the respective band-pass units U1-Un includes a band-pass means 21 and a receiving quality detection means 22.

Herein, the respective band-pass means 21 have different passbands that allow signals in different frequency bands to pass.

In operation, a signal S1 which has been transmitted from the transmitting/receiving apparatus 1 passes through a transmission way 3 to be received by the transmitting/receiving apparatus 2. The signal S 1 thus received is inputted in parallel to all of the band-pass means 21.

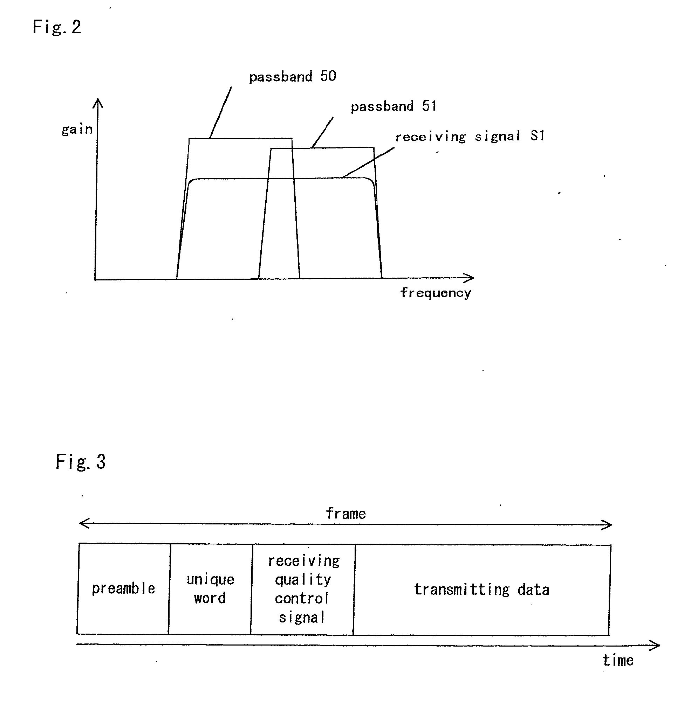

Referring now to Fig. 2, an example is shown in which the band-pass means 21 includes only two systems (a case where the band-pass units U1-Un are two systems). The band-pass means 21 of the band-pass unit U1 has a passband 50 that allows only a signal in its band, of the received signal S1, to pass. The band-pass means 21 of the band-pass unit U2 has a passband 51 that allows only that part ofthe received signal S1, in its band to pass. Although passbands U1 and U2 overlap slightly, they are generally contiguous.

As shown in Fig. 1, after the received signal S1 passes through the band-pass means 21 it is inputted into the corresponding receiving quality detection means 22 as a band-pass signal S2.

The receiving quality detection means 22 detects the receiving data S3 from the band-pass signal S2 and also detects a receiving quality information S4 from the band-pass signal S2. The receiving quality information S4 is applied to a receiving quality control means 23. The receiving quality information S4 contains information on bit errors and/or the received signal level, or the like (which will be explained in Embodiment 2).

The receiving quality control means 23 generates, based on the receiving quality information S4 inputted from the plurality of receiving quality detection means 22, a receiving quality control signal S5 for each passband. This receiving quality detecting signal S5 is a signal is the basis for controlling the electric energy level ofthe signal S 1 transmitted by the transmitting/receiving apparatus 1 for each passband.

Concretely, the receiving quality control signal S5 is an electric energy control signal for adjusting the electric energy level of the signal S1 to be transmitted by the transmitting/receiving apparatus S1, the electric amount information concerning the amount of electric energy-designating value which the second transmitting/receiving apparatus 2 demands from the signal S1, an error rate of receiving data, the number of error bits in receiving or the like (which will be descried in Embodiments 3-6).

In addition, as the receiving quality control signal S5, the receiving quality information S4 to be outputted by the receiving quality detection means 22 may be used without modification. In this case, compared to a case in which the receiving quality control signal S5 has a different content from the receiving quality information S4, construction of the receiving quality control means 23 is simplified.

The transmitting signal generating means 24 generates a signal S7 by means of the receiving quality control signal S5 inputted from the receiving quality control means 23 and transmitting data S6.

Fig. 3 is a constructional diagram of the signal S7 which the receiving quality control means 24 transmits to the transmitting/receiving apparatus 1. As shown in Fig. 3, in the signal S7, one frame is composed of a preamble, a unique word, a receiving quality control signal, and transmitting data. The receiving quality control signal is composed of the receiving quality control signal S5 for each passband.

Then, as shown in Fig. 1, the signal S7, transmitted from the transmitting/receiving apparatus 2, is received by the transmitting/receiving apparatus 1 after passing through the transmission way 3. A receiving quality control signal extracting means 12 takes out the receiving data S8 from the received signal S7 and also extracts the receiving quality control signal S5. The receiving quality control signal extracting means 12 outputs the extracted receiving quality control signal S5 to a transmitting/receiving signal control means 11 as transmitting signal control information.

The receiving quality control signal S5 and transmitting signal control information 9 may use identical or different methods for expressing the signal. However, both have identical content in such respect that both are signals which aim to control electric energy for the signal S1 to be transmitted by the transmitting/receiving apparatus 1.

The transmitting signal control means 11 generates the signal S 1 based on the transmitting data S10. At this time, the transmitting signal control means 11 adjusts the transmitting electric energy of the signal S 1 in accordance with the transmitting signal control information S9 inputted from the receiving quality control signal extracting means 12 (control of transmitting electric energy).

As mentioned above, the receiving quality control signal S5 and the receiving signal control information S9 are identical in content, therefore this may be referred to as the transmitting electric energy of the signal S1 which is controlled based on the receiving quality control signal S5.

Control for the transmitting electric energy by the transmitting signal control means 11 is performed separately for each frequency band (each passband of the transmitting/receiving apparatus 2). Then, the signal S1 which has been controlled in terms of the transmitting electric energy by the sending signal control means 11 is propagated through the transmission way 3 and received by the transmitting/receiving apparatus 2.

As above, in the present embodiment, the band-pass means 21 of the transmitting/receiving apparatus 2 divides the received signal S 1 for different bands by means, detects the receiving quality information S4 for each of the passbands, and generates the receiving quality control signal S5. Then, the transmitting/receiving apparatus 2 transmits the receiving quality control signal S5 based on the receiving quality information S4 to the transmitting/receiving apparatus 1.

Based on the receiving quality control signal S5, the transmitting/receiving apparatus 1 controls the electric energy in the bands of the signal S1 to be transmitted taking the receiving quality of the transmitting/receiving apparatus 2 into consideration.

As a result, the transmitting/receiving apparatus 1 transmits a signal at an appropriate level in which the receiving quality in the transmitting/receiving apparatus 2 is taken into consideration. As a result, deterioration in the receiving quality in the transmitting/receiving apparatus 2 is reduced.

As long as the band-pass means 21 (band-pass units U1-Un) are composed of at least two systems (a plurality of systems), the beneficial effects of the invention are obtained. Moreover, in the present embodiment, a modulator-demodulator means may be used.

Moreover, the receiving quality control signals S5 generated for each passband may be output to the transmitting signal generation means 24 in a lump.

### (Embodiment 2)

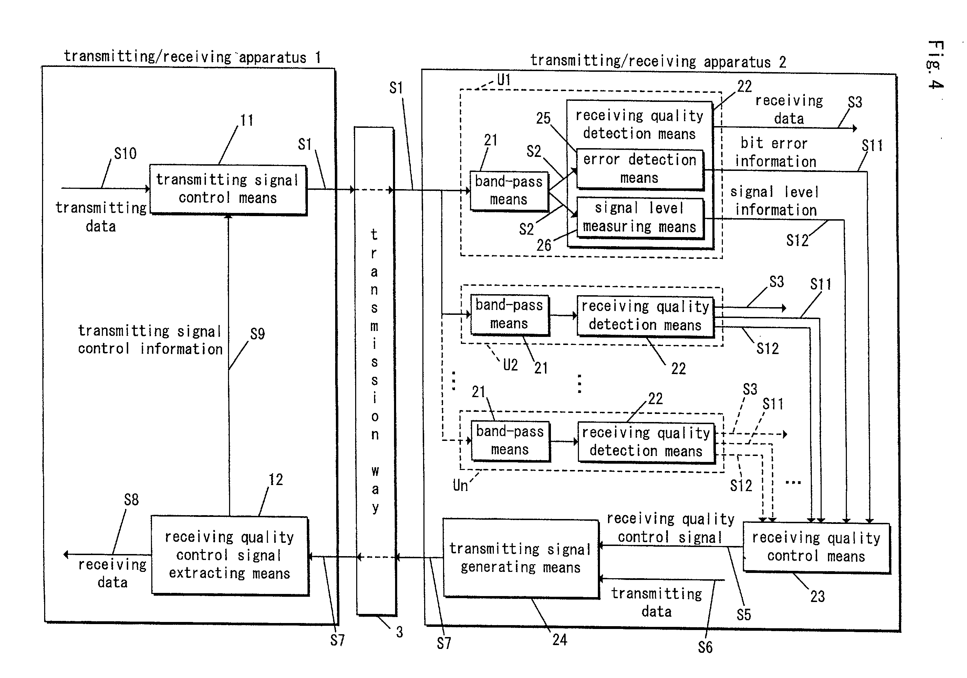

Referring now to Fig. 4, a transmitting/receiving system according to Embodiment 2 of the invention is similar to that of Embodiment 1 except that the receiving quality detection means 22 of the transmitting/receiving apparatus 2 includes an error detection means 25 and a signal level measuring means 26.

In operation the band-pass signal S2 inputted to the receiving quality detection means 22 is applied in parallel to the error detection means 25 and the signal level measuring means 26. The error detection means 25 generates bit error information S11 in the signal in the band-pass signal S2 for output to the receiving quality control means 23.

The bit error information S11 is a signal containing information about the occurrence of bit errors. For example, the bit error information S11 may be a state signal which becomes high level (H-level) only at a point in time when errors occur, a state signal which becomes H-level for only a period of time after errors occur or the like.

On the other hand, the signal level measuring means 26 measures the signal level of the band-pass signal S2 and outputs signal level information S12 to the receiving quality control means 23. Herein, the bit error information S11 and the signal level information S12 correspond to the receiving quality information S4 of Embodiment 1.

The receiving quality control means 23 generates a receiving quality control signal S15 for each passband by means of the bit error information S11 provided by the plurality of error detection means 25 and the signal level information S12 provided by the plurality of signal level measuring means 26. Other operations are similar to those of the transmitting/receiving system of Fig. 1 (Embodiment 1).

As above, in the present embodiment, the receiving quality information to be detected by the receiving quality detection means 22 is the bit error information S11 and the signal level information S12.

Compared to Embodiment 1, the receiving quality in the transmitting/receiving apparatus 2 is more properly judged. Thus, the transmitting/receiving apparatus 2 can transmit the more proper receiving quality control signal S5 to the transmitting/receiving apparatus 1.

Accordingly, based on the receiving quality control signal S5, the transmitting/receiving apparatus 1 can transmit the signal S1 at a more appropriate electric energy level to the transmitting/receiving apparatus 2. As a result, deterioration in the receiving quality in the transmitting/receiving apparatus 2 can further be reduced.

Herein, as long as the band-pass means 21 (band-pass units U1-Un) are composed of at least two systems (a plurality of systems), the beneficial effects of the invention are obtained. Moreover, in the present embodiment, a modulator-demodulator means may be provided.

In the receiving quality detection means 23 of Fig. 4, both the bit error information S11 and the signal level information S12 are detected and utilized. However, even if only one of these sources of information is detected and utilized, similar effects are obtained.

The receiving quality control signal S5, the bit error information S11 and the signal level information S12 to be outputted by the receiving quality detection means 22 may be used without modification. In this case, compared to a case where the receiving quality control signal S5 is different in content from the bit error information S11 and the signal level information S12 is generated, the construction of the receiving quality control means 23 is simplified.

### (Embodiment 3)

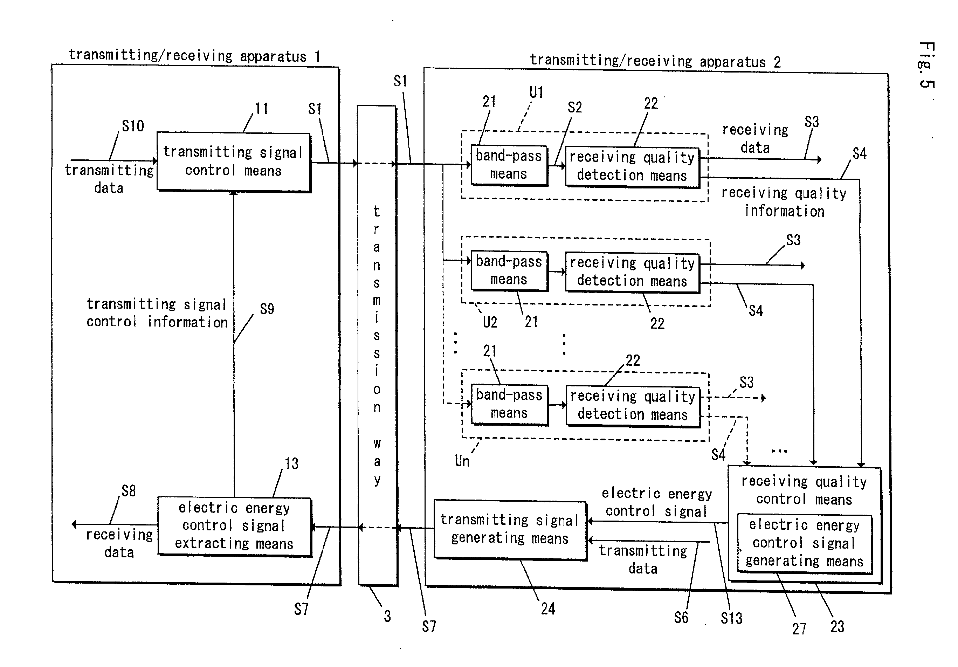

Referring now to Fig. 5, a transmitting/receiving system according to Embodiment 3 of the invention includes a transmitting/receiving system which employs a receiving quality control means 23 that contains an electric energy control signal generating means 27. In addition, the transmitting/receiving system of Fig. 5, includes an electric energy control signal extracting means 13 which is substituted for the receiving quality control signal extracting means 12 of the transmitting/receiving system of Fig. 1. Other elements of construction are the same as those of the transmitting/receiving system of Fig. 1.

In operation, the electric energy control signal generating means 27 generates, based on the receiving quality information S4 from the plurality of receiving quality detection means 22, the electric energy control signal S13 for each passband. This energy control signal S13 is included in the signal S7 that is transmitted by the transmitting signal generating means 24 to the electric energy control signal extracting means 13.

An electric energy control signal generating means 27 judges, based on the receiving quality information S4 about each passband, the electric energy that is necessary for satisfactory data demodulation in the bands where the receiving quality has deteriorated. Then, based on the judgement results, the electric energy control signal generating means 27 generates the electric energy control signal S13.

This electric energy control signal S13 contains the necessary information to permit the adjustment of the electric energy level of the signal S1 to be transmitted by the transmitting/receiving apparatus 1 in each passband (a control signal for controlling the amount of electric energy of the signal S1 to be transmitted by the transmitting/receiving apparatus 1 for each passband).

This electric energy control signal S13 may include, for example, a signal for issuing instructions to raise or lower the amount of electric energy of the signal S 1 to be transmitted to the transmitting/receiving apparatus 1. Herein, the electric energy control signal S13 corresponds to the receiving quality control signal S5 of Embodiment 1.

The transmitting signal generating means 24 generates the signal S7 based on the electric energy control signal S13 and the transmitting data S6.

The electric energy control signal extracting means 13 of the transmitting/receiving apparatus 1 separates the receiving data S8 and the electric control signal S13 from the received signal S7,

The electric energy control signal extracting means 13 then outputs the extracted electric energy control signal S13 to the transmitting signal control means 11 where it is used as the transmitting signal control information S9. Other operations are similar to those of the transmitting/receiving system of Fig. 1.

In addition, the relationship between the electric energy control signal S13 and the transmitting signal information S9 is similar to the relationship between the receiving quality control signal S5 and the transmitting signal control information S9 of Embodiment 1.

As above, in the present embodiment, the transmitting/receiving apparatus 2 generates the electric energy control signal S13 which adjusts the electric energy level of the signal S2 to be transmitted by the transmitting/receiving apparatus 1 for each passband for transmission to the transmitting/receiving apparatus 1.

Thus, the transmitting/receiving apparatus 1 can adjust the electric energy level of the signal S1 to be transmitted using the content of the electric energy control signal S13 to be transmitted by the transmitting/receiving apparatus 1 without modification. Effects similar to those of Embodiment 1 are also provided.

In addition, as long as the band-pass means 21 (band-pass units U1-Un) includes at least two systems, the desirable effects of the invention are obtained. Furthermore, in the present embodiment, a modulator-demodulator means may be provided.

In addition, as the receiving quality detection means 22 of the present embodiment, the error detection means 25 and the signal level measuring means 26 of Embodiment 2 may be used. In this case, effects which are similar to those of Embodiment 2 are also provided.

In addition, the electric energy control signals S13 generated for each passband may be output to the transmitting signal generation means 24 in a lump.

### (Embodiment 4)

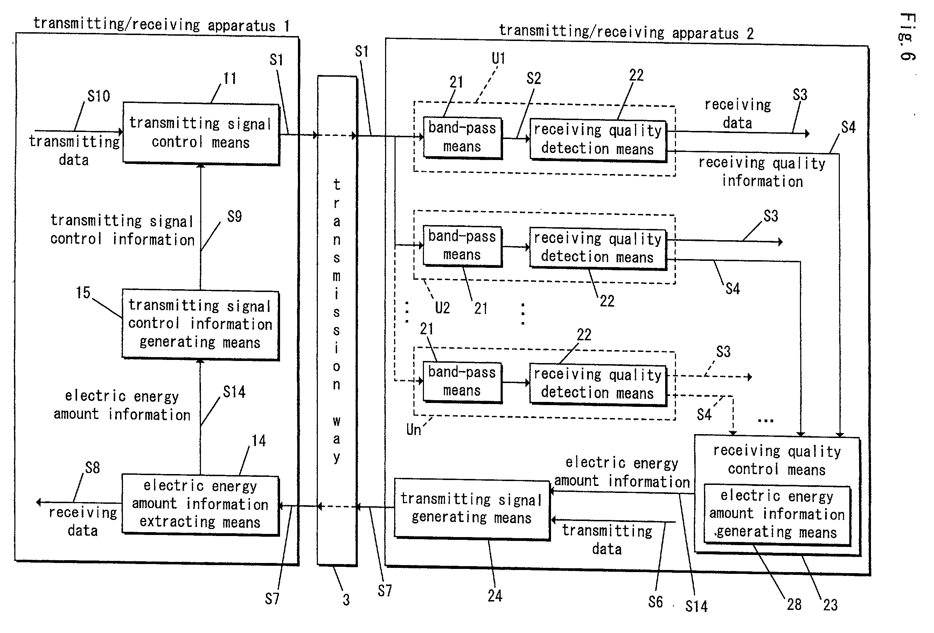

Referring now to Fig. 6, a transmitting/receiving system according to Embodiment 4 of the invention employs a receiving quality control means 23 similar to the transmitting/receiving system of Fig. 1. That is, the receiving quality control means 23 of Embodiment 4 includes an electric energy amount information generating means 28.

In addition, in the transmitting/receiving system of Fig. 6, in place of the receiving quality control signal extracting means 12 of the transmitting/receiving system of Fig. 1, contains the amount of electric energy information extracting means 14. In addition, a transmitting signal control information generating means 15 is added. Other elements of construction are the same as those of the transmitting/receiving system of Fig. 1.

In operation, the electric energy amount information generating means 28 generates, based on the receiving quality information S4 from the plurality of receiving quality detection means 22, amount of electric energy information S14 for each passband. This information is output to the transmitting signal generating means 24. The amount of electric energy information S14 is information regarding an amount of electric energy-designating value (for example, 1dB or the like) for each passband which the transmitting/receiving apparatus 2 demands from the signal S 1 transmitted by the transmitting/receiving apparatus 1.

The electric energy amount information generating means 28 judges, based on the receiving quality information S4 for each passband, the amount of electric energy that is necessary for satisfactory data demodulation in bands where the receiving quality has deteriorated.

The electric energy amount information generating means 28 then generates, based on the judgement results, the amount of electric energy information S14. Herein, the amount of electric energy information S14 corresponds to the receiving quality control signal S5 of Embodiment 1.

The transmitting signal generating means 24 generates the signal S7 based on the amount of electric energy information S14 that was inputted from the electric energy amount information generating means 28 and the transmitting data S6.

The amount of electric energy information extracting means 14 of the transmitting/receiving apparatus 1 takes out the receiving data S8 and also extracts the amount of electric energy information S14.

The amount of electric energy information extracting means 14 then outputs the extracted amount of electric energy information S14 to the transmitting signal control information generating means 15. The transmitting signal control information generating means 15 generates, based on the amount of electric energy information S14, the transmitting signal control information S9, for an output to the transmitting signal control means 11.

This transmitting signal control information S9 is a signal for setting the amount of electric energy of the signal S1 to be transmitted by the transmitting/receiving apparatus 1 to an amount of electric energy designated by the amount of electric energy information S14. Other operations are similar to those of the transmitting/receiving system (Embodiment 1) of Fig. 1.

The transmitting signal control information S9 is based on the amount of electric energy information S14. Therefore its value is expressed in a manner that permits control of transmitting electric energy by the transmitting signal control means 11 based on the amount of electric energy information S14 (which corresponds to the receiving quality control signal S5).

As above, in the present embodiment, the transmitting/receiving apparatus 2 generates the amount of electric energy information S14 concerning the amount of electric energy-designating value for each passband which is demanded in the signal S1 to be transmitted by the transmitting/receiving apparatus 1, for a transmission to the transmitting/receiving apparatus 1.

Therefore, the transmitting/receiving apparatus 1 is enabled to transmit the signal S1 that satisfies the amount of electric energy-designating value demanded by the transmitting/receiving apparatus 2. As a result, the receiving quality in the transmitting/receiving apparatus 2 remains satisfactory even under varying conditions of transmission. Moreover, effects which are similar to those of Embodiment 1 are also provided.

The amount of electric energy information S14 generated by the electric energy amount information generating means 28, that is, the amount of electric energy-designating value, may be either a relative value or an absolute value. Similar effects are obtained in both cases.

As long as the band-pass means 21 (band-pass units U1-Un) include at least two systems (a plurality of systems), similar effects are obtained. In the present embodiment, a modulator-demodulator means may be provided.

In addition, instead of the receiving quality detection means 22 of the present embodiment, the error detection means 25 and the signal level measuring means 26 of Embodiment 2 may be used. In this case, effects which are similar to those of Embodiment 2 are also provided.

The electric energy information S14 generated for each passband may be output to the transmitting signal generation means 24 in a lump.

### (Embodiment 5)

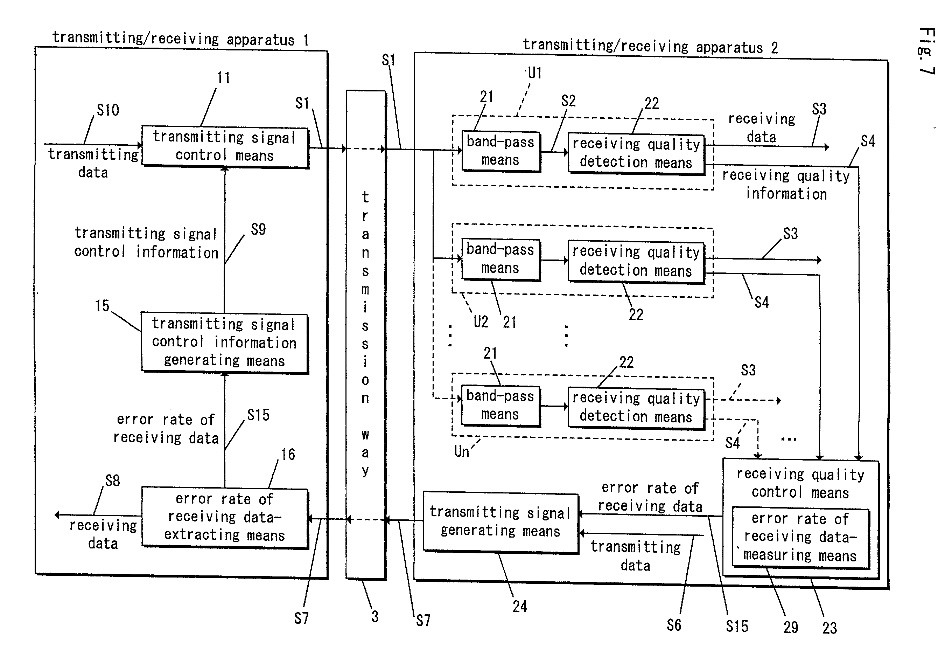

Referring now to Fig. 7, a transmitting/receiving system includes a receiving quality control means 23 similar to the transmitting/receiving system of Fig. 1. That is, the receiving quality control means 23 includes an error rate of receiving data-measuring means 29. The transmitting/receiving system of Fig. 7 substitutes an error rate of receiving data-extracting means 16 for the receiving quality control signal extracting means 12 of the transmitting/receiving system of Fig. 1. A transmitting signal control information generating means 15 is added. Other elements of construction are the same as those of the transmitting/receiving system of Fig. 1.

In operation, the error rate of receiving data-measuring means 29 measures, based on the receiving quality information S4 from the plurality of receiving quality detection means 22, an error rate of receiving data S15 for an output to the transmitting signal generating mean S24. That is, the error rate of receiving data-measuring means 29 measures the error rate of receiving data S15 for each passband based on the receiving quality information S4 for each passband. This error rate of receiving data S15 is a ratio of the number of error bits included in the receiving data per unit time (an error rate). Herein, the error rate of receiving data S15 corresponds to the receiving quality control signal S5 of Embodiment 1.

The receiving quality information S4 to be inputted into the error rate of receiving data-measuring means 29 may be, for example, a signal which becomes H-level only at a point in time when errors occur.

The transmitting signal generating means 24 generates the signal S7 by means of the error rate of receiving data S15 inputted from the error rate of receiving data-measuring means 29 and the transmitting data S6.

The error rate of receiving data-extracting means 16 of the transmitting/receiving apparatus 1 separates the receiving data S8 from the received signal S7 and also outputs the extracted error rate of receiving data S15 to the transmitting signal control information generating means 15. The transmitting signal control information generating means 15 generates, based on the error rate of receiving data S15, the transmitting signal control information S9 for output to the transmitting signal control means 11.

This transmitting signal control information S9 is a signal used for adjusting the amount of electric energy of the signal S1 to be transmitted by the transmitting/receiving apparatus 1. This adjustment takes into consideration the error rate of receiving data S15 for each band. Other operations are similar to those of the transmitting/receiving system of Fig. 1.

The transmitting signal control information S9 is based on the error rate of receiving data S15. Therefore, the signal S9 is expressed in a manner that permits control of transmitting electric energy by the transmitting signal control means 11 based on the error rate of receiving data S15 (which corresponds to the receiving quality control signal S5).

As above, in the present embodiment, the transmitting/receiving apparatus 2 measures the error rate of receiving data S15, which is a ratio of the number of error bits included in the receiving data per unit time, for a transmission to the transmitting/receiving apparatus 1.

Therefore, the transmitting/receiving apparatus 1 generates the signal S1 to be transmitted taking the error rate of receiving data S15 in the transmitting/receiving apparatus 2 into consideration. As a result, errors of receiving data in the transmitting/receiving apparatus 2 are reduced. That is, deterioration in the receiving quality of the transmitting/receiving apparatus 2 is reduced.

In addition, the error rate of receiving data S15 to be outputted by the error rate of receiving data-measuring means 29 may be either a relative value or an absolute value. Both types of signal produce similar effects.

As long as the band-pass means 21 (band-pass units U1-Un) contains at least two systems (a plurality of systems), similar effects are obtained. Moreover, in the present embodiment, a modulator-demodulator means may be provided.

Instead of the receiving quality detection means 22 of the present embodiment, the error detection means 25 and the signal level measuring means 26 of Embodiment 2 may be used. In that case, effects which are similar to those of Embodiment 2 are also provided.

The error rates of receiving data S15 generated for each passband may be output to the transmitting signal generation means 24 in a lump.

### (Embodiment 6)

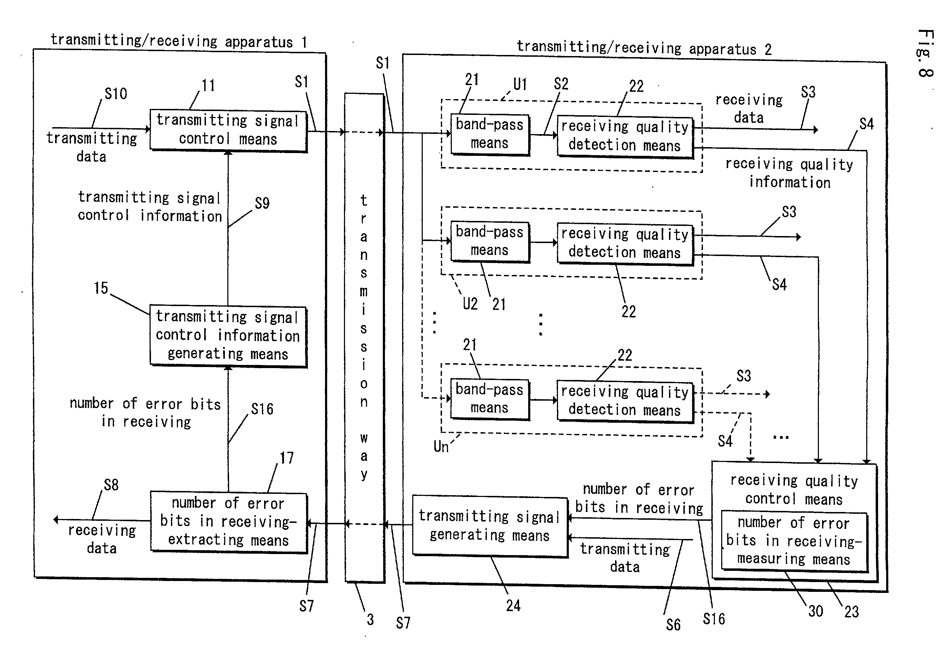

Referring now to Fig. 8, a transmitting/receiving system according to Embodiment 6 of the invention is similar to that of Fig. 1, except that the present embodiment includes a number of error bits in receiving-measuring means 30. Also, instead of the receiving quality control signal extracting means 12 of the transmitting/receiving system of Fig. 1, a number of error bits in receiving-extracting means 17 is provided. Furthermore, a transmitting signal control information generating means 15 is added. Other elements of construction are the same as those of the transmitting/receiving system of Fig. 1.

In operation, the number of error bits in receiving-measuring means 30 measures, based on the receiving quality information S4 from the plurality of receiving quality detection means 22, the number of error bits in receiving S16 for each band. This information is output to the transmitting signal generating means 24. The number of error bits in receiving-measuring means 30 measures the number of error bits in receiving S16 for each passband based on the receiving quality information S4 for each passband.

This number of error bits in receiving S16 is the number of error bits per unit time. Herein, the number of error bits in receiving S16 corresponds to the receiving quality control signal S5 of Embodiment 1.

In addition, as the receiving quality information S4 to be inputted into the number of error bits in receiving-measuring means 30, for example, a signal which becomes H-level only at points in time when errors occur.

The transmitting signal generating means 24 generates the signal S7 by means of the number of error bits in receiving S16 inputted from the number of error bits in receiving-measuring means 30 and the transmitting data S6.

The number of error bits in receiving-extracting means 17 of the transmitting/receiving apparatus 1 takes out the receiving data S8 from the received signal S7 and also extracts the number of error bits in receiving S16. The number of error bits in receiving-extracting means 17 then outputs the error rate of receiving data-extracting means 16 to the transmitting signal control information generating means 15. The transmitting signal control information generating means 15 generates, based on the number of error bits in receiving S16, the transmitting signal control information S9, for an output to the transmitting signal control means 11.

This transmitting signal control information S9 is a signal used for adjusting the amount of electric energy of the signal S1 to be transmitted by the transmitting/receiving apparatus 1 while taking the number of error bits in receiving S16 for each band into consideration. Other operations are similar to those of the transmitting/receiving system (Embodiment 1) of Fig. 1.

The transmitting signal control information S9 is based on the number of error bits in receiving S16. Therefore this information is expressed in a manner that permits control of transmitting electric energy by the transmitting signal control means 11 based on the number of error bits in receiving S16 (which corresponds to the receiving quality control signal S5).

As above, in the present embodiment, the transmitting/receiving apparatus 2 measures the number of error bits in receiving S16, which is the number of error bits included in the receiving data per unit time, for a transmission to the transmitting/receiving apparatus 1.

Therefore, the transmitting/receiving apparatus 1 can generate the signal S1 to be transmitted while taking the number of error bits in receiving S16 in the transmitting/receiving apparatus 2 into consideration. As a result, errors of receiving data in the transmitting/receiving apparatus 2 is reduced. That is, deterioration in the receiving quality of the transmitting/receiving apparatus 2 is reduced.

In addition, the number of error bits in receiving S16 outputted by the number of error bits in receiving-measuring means 30 may be either a relative value or an absolute value. Similar effects are obtained in both cases.

As long as the band-pass means 21 (band-pass units U1-Un) includes at least two systems (a plurality of systems), similar effects are obtained. Moreover, in the present embodiment, a modulator-demodulator means may be provided.

The receiving quality detection means 22 of the present embodiment may be replaced by the error detection means 25 and the signal level measuring means 26 of Embodiment 2. In this case, effects which are similar to those of Embodiment 2 are also provided.

In addition, the number of error bits in receiving S16 generated for each passband may be output to the transmitting signal generation means 24 in a lump.

### (Embodiment 7)

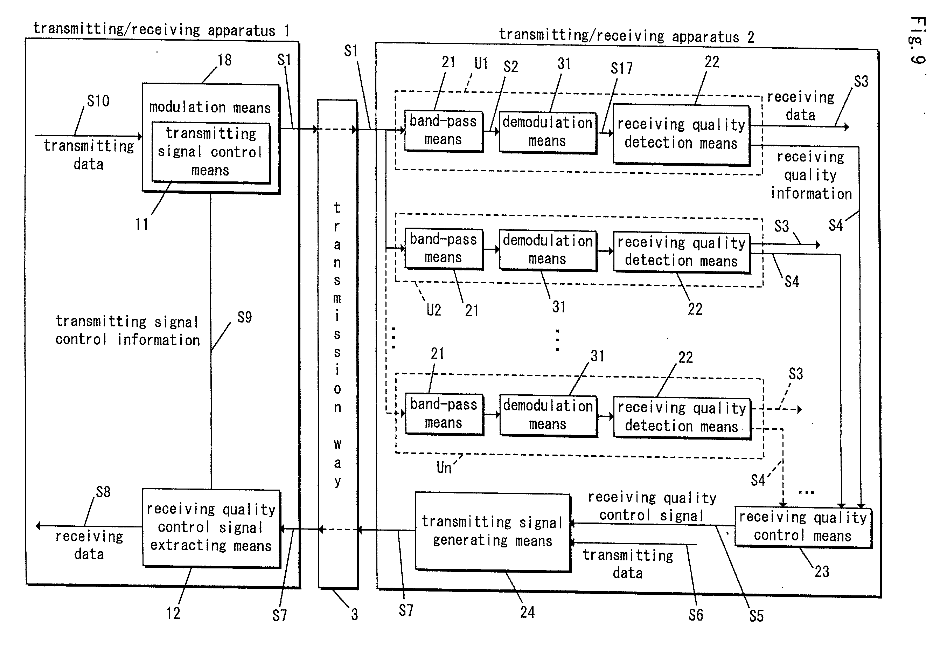

Referring now to Fig. 9, a transmitting/receiving system according to Embodiment 7 of the invention is similar to Fig. 1, except that the transmitting/receiving system of Fig. 9 includes a modulation means 18 and a demodulation means 31. The modulation means 18 includes the transmitting signal control means 11. In the transmitting/receiving apparatus 2, the demodulation means 31 is located between the band-pass means 21 and the receiving quality detection means 22. Construction other than these is the same as that of the transmitting/receiving system of Fig. 1.

In operation, the modulation means 18 of the transmitting/receiving apparatus 1 applies a modulation to the receiving data S10. This modulation means 18 employs a modulating method according to the characteristics of the transmission way 3.

As one example of the modulating methods to be employed, for a transmission way where distortion is small, a multi-valued modulation is performed. This permits transmitting a large volume of information bits in one modulated wave, thus enabling more speedy transmission.

As another example of the modulating methods to be employed, for a transmission using bands where broadcast waves of radios etc., exist, a multi-carrier modulation is performed. Multi-carrier modulation enables transmission of carriers in the bands where broadcast waves exist is stopped. This avoids interference with and/or due to the broadcast waves. Multi-carrier modulation is described in detail below in connection with Embodiment 8.

The transmitting signal control means 11 generates the signal S 1 by means of the modulated transmitting data S10.

At this time, the transmitting signal control means 11 adjusts, based on the transmitting signal control information S9 inputted from the receiving quality control signal extracting means 12, the transmitting electric energy of the modulated transmitting data S10 for each frequency band (each passband in the transmitting/receiving apparatus 2) for output as the signal S1. That is, the transmitting signal control means 11 performs control of transmitting electric energy for bands where the receiving quality has deteriorated, based on the transmitting signal control information S9. Other operations in the transmitting/receiving apparatus 1 are similar to those of Embodiment 1.

In the transmitting/receiving apparatus 2, the band-pass means 21 outputs the band-pass signal S2 to the corresponding demodulation means 31.

The demodulation means 31 demodulates the band-pass signal S2 and outputs the demodulated data S17 to the receiving quality detection means 22. Herein, the demodulation means 31 is conformable to the modulating method of the modulation means 18.

The receiving quality detection means 22 separates the receiving data S3 from the demodulated data S17 and also detects the receiving quality information S4 by means of the demodulated data S17 for an output to the receiving quality control means 23. Other operations in the transmitting/receiving apparatus 2 are similar to those of Embodiment 1.

As above, in the present embodiment, the transmitting/receiving apparatus 1 includes the modulation means 18 which applies a modulation according to the characteristics of the transmission way 3.

As a result, the first transmitting/receiving apparatus 1 can transmit the signal S1 which is not easily adversely affected by the transmission way 3. Moreover, effects which are similar to those of Embodiment 1 are provided.

As long as the band-pass means 21 (band-pass units U1-Un) includes at least two systems (a plurality of systems), similar effects are obtained.

Moreover, a transmitting/receiving system may be constructed by combining the present embodiment and Embodiments 2-6.

### (Embodiment 8)

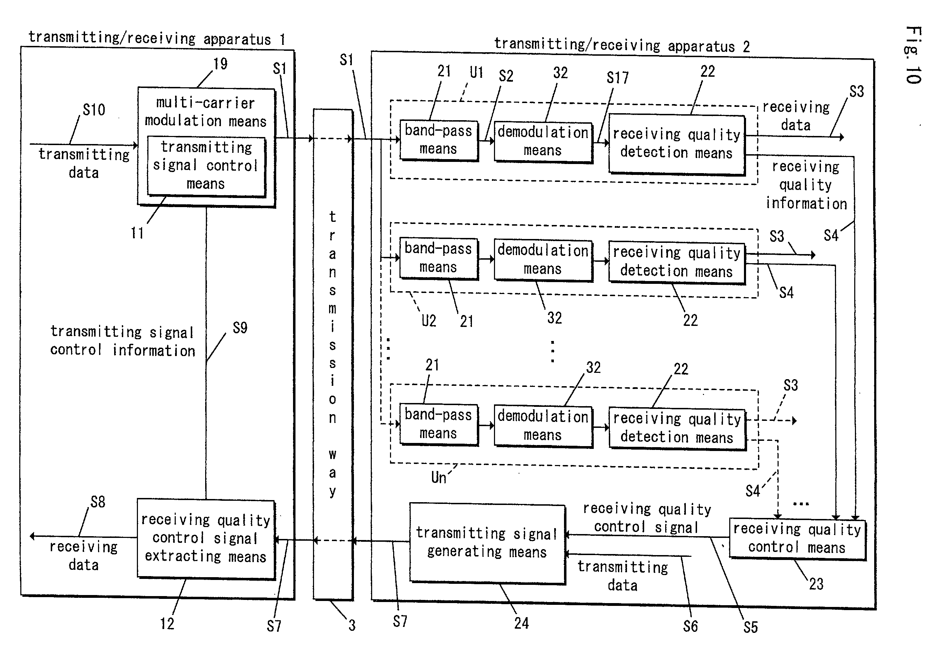

Referring now to Fig. 10, a transmitting/receiving system according to Embodiment 8 of the invention substitutes for the modulation means 18 of the transmitting/receiving system of Fig. 9, a multi-carrier modulation means 19. A demodulation means 32 of Fig. 10 is conformable to a multi-carrier modulation method. Other elements of construction are the same as those of the transmitting/receiving system of Fig. 9.

In operation, in the transmitting/receiving apparatus 1, the multi-carrier modulation means 19 applies a multi-carrier modulation to the receiving data S10. The transmitting signal control means 11 generates the signal S1 by means of the multi-carrier-modulated transmitting data S10. At this time, the transmitting signal control means 11 controls, based on the transmitting signal control information S9 inputted from the receiving quality control signal extracting means 12, the transmitting electric energy of the multi-carrier-modulated transmitting data S10 for each frequency band (control of transmitting electric energy) for output as the signal S1. Other operations are similar to those of Embodiment 7.

As control of the transmitting electric energy by the transmitting signal control means 11, in order to improve the receiving quality in the transmitting/receiving apparatus 2, in addition to the control, as in Embodiment 1, for adjusting the electric energy level of the signal S 1 to be transmitted, control for reducing or stopping the output of the signal S1 to be transmitted is also performed. Hereinafter, a detailed description will be given in this respect.

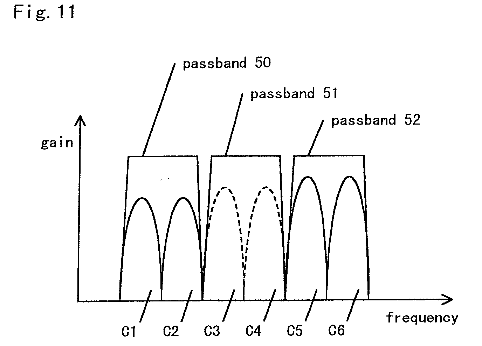

Fig. 11 is an exemplary diagram of the signal S 1 obtained by applying a multi-carrier modulation and control of transmitting electric energy to the transmitting data S10. Fig. 11 shows the case where three band-pass means 21 exist in the transmitting/receiving apparatus 2. That is, the three band-pass means 21 have different passbands 50, 51, and 52, respectively.

As shown in Fig. 11, multi-carrier modulation is a method wherein a plurality of carriers C1-C6 (in Fig. 11, two carriers per band-pass means) are lined up and transmitted.

Accordingly, in the multi-carrier method, if the SN ratio deteriorates in some bands, it is only signal of the deteriorated bands that cannot be demodulated. Signals in other bands may still be demodulated.

Therefore, with respect to bands where deterioration in the receiving quality of the second transmitting/receiving apparatus 2 is not improved even though the first transmitting/receiving apparatus adjusts the level of the signal S1 to be transmitted by maximizing the transmitting amount of electric energy of the signal S1, etc., the transmitting signal control means 11 can perform control for reducing or stopping the output of the signal 1 to be transmitted.

As a result, effects such that a reduction in interference waves to other systems due to unnecessary energy outputs, a reduction in electric energy consumption of the transmitting/receiving system, and prevention of saturation of analog stages of the amplifier is obtained.

In Fig. 11, the carriers C3 and C4 which are indicated by broken lines show carriers which have been stopped from being transmitted through control of the transmitting electric energy by the transmitting signal control means 11. That is, transmission is stopped in a passband 51.

Also, in Fig. 11, when the signals in passband 50 and passband 52 are compared, the carriers C1 and C2 are different from the carriers C5 and C6 in gain (amount of electric energy) due to the control oftransmitting electric energy which is similar to that of Embodiment 1.

As above, in the present embodiment, the multi-carrier modulation method is employed. Therefore, with respect to the passbands where deterioration in the receiving quality of the second transmitting/receiving apparatus is not improved even by performing transmitting electric energy control which is similar to that of Embodiment 1, control for reducing or stopping the output of the transition signal S 1 is carried out.

As a result, effects such that a reduction in interference waves to other systems, a reduction in electric power consumption of the transmitting/receiving system, and prevention of saturation of analog stages of the amplifier is obtained. Moreover, effects similar to those of Embodiment 1 are provided.

In addition, as long as the band-pass means 21 (band-pass units U1-Un) include at least two systems (a plurality of systems), similar effects are obtained.

Moreover, a transmitting/receiving system may be constructed by combining the present embodiment and Embodiments 2-6.

### (Embodiment 9)

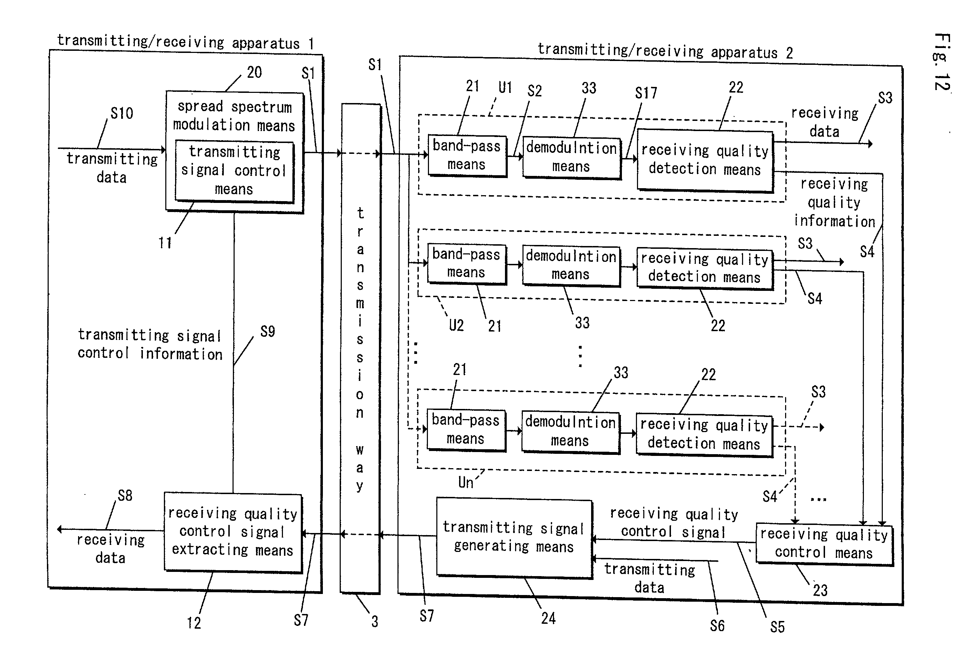

Referring now to Fig. 12 a transmitting/receiving system according to Embodiment 9 of the invention substitutes for the modulation means 18 of Fig. 9, a spread spectrum modulation means 20. A demodulation means 33 of Fig. 11 is conformable to a spread spectrum modulating method. Other elements of construction are the same as those of the transmitting/receiving system of Fig. 9.

Now, operations will be described. The spread spectrum modulation means 20 applies a spread spectrum modulation to the receiving data S10. The transmitting signal control means 11 generates the signal S1 by means of the spread spectrum-modulated transmitting data S10. At this time, the transmitting signal control means 11 controls, based on the transmitting signal control information S9 inputted from the receiving quality control signal extracting means 12, the transmitting electric energy of the spread spectrum-modulated transmitting data S10 for each frequency band (control of transmitting electric energy) for an output as the signal S1. Other operations are similar to those of Embodiment 7.

As control of the transmitting electric energy by the transmitting signal control means 11, in order to improve the receiving quality in the transmitting/receiving apparatus 2, in addition to the control, as in Embodiment 1, for adjusting the electric energy level of the signal S 1 to be transmitted, control for reducing or stopping the output of the signal S1 to be transmitted is also performed. Hereinafter, a detailed description will be given in this respect.

The spread spectrum method is a broadband communication system. Accordingly, even if noise and distortion occur in some bands, when the SN ratio is satisfactory in some of the received bands, demodulation is possible.

Therefore, with respect to bands where deterioration in the receiving quality of the second transmitting/receiving apparatus 2 is not improved even by adjusting the level of the signal S 1 to be transmitted by maximizing the transmitting amount of electric energy of the signal S1, etc., the transmitting signal control means 11 can reduce or stop the output of the signal S1 to be transmitted.

As a result, effects such as a reduction in interference waves to other systems due to unnecessary energy outputs, a reduction in electric power consumption of the transmitting/receiving system, and prevention of saturation of analog stages of the amplifier is obtained.

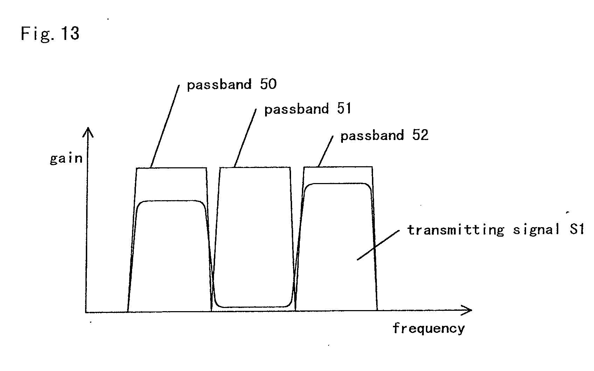

Fig. 11 is an exemplary diagram of the signal S 1 obtained by applying a spread spectrum modulation and control of transmitting electric energy for the transmitting data S10. Similar to Fig. 11, Fig. 13 shows a case where three band-pass means 21 exist in the transmitting/receiving apparatus 2.

In Fig. 13, the concave portion of the signal S1 to be transmitted by the transmitting/receiving apparatus 1 shows a waveform of the band where transmission is stopped through control of transmitting electric energy. That is, in the passband 51, transmission is stopped.

Also, in Fig. 13, when the waveform of the passband 50 and the waveform of the passband 52 are compared, both are different in gain (amount of electric energy) due to the control of transmitting electric energy which is similar to that of Embodiment 1.

As mentioned above, in the present embodiment, spread spectrum modulation method is employed. Therefore, with respect to the passbands where deterioration in the receiving quality ofthe second transmitting/receiving apparatus is not improved even by performing transmitting electric energy control which is similar to that of Embodiment 1, control for reducing or stopping the output ofthe transition signal S 1 to be transmitted is carried out.

As a result, effects such as a reduction in interference waves to other systems, a reduction in electric power consumption of the transmitting/receiving system, and prevention of saturation of analog stages of the amplifier is obtained. Moreover, effects similar to those of Embodiment 1 are provided.

As long as the band-pass means 21 (band-pass units U1-Un) include at least two systems (a plurality of systems), similar effects are obtained.

A transmitting/receiving system may be constructed by combining the present embodiment and Embodiments 2-6.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A transmitting/receiving system comprising:
first and second transmitting/receiving apparatuses which mutually carry out transmission and reception, wherein
said second transmitting/receiving apparatus includes a plurality of band-pass means having different passbands for a signal which has been received from said first transmitting/receiving apparatus;
a plurality of receiving quality detection means responsive to respective ones of said band-pass means;
said plurality of receiving quality detection means including means for detecting receiving quality information of a signal which has passed through said corresponding band-pass means;
a receiving quality control means which generates, based on said receiving quality information provided by said plurality of receiving quality detection means, a receiving quality control signal for each passband;
said receiving quality control signal is a signal which becomes a basis for controlling the level of a signal transmitted by said first transmitting/receiving apparatus; and
said first transmitting/receiving apparatus adjusts, based on said receiving quality control signal which has been transmitted by said second transmitting/receiving apparatus, a level of a signal to be transmitted for each passband.

2. A transmitting/receiving system as set forth in claim 1, wherein said receiving quality information is at least one of bit errors and a signal level.

3. A transmitting/receiving system as set forth in claim 1, wherein said receiving quality control means uses said receiving quality information as said receiving quality control signal.

4. A transmitting/receiving system as set forth in claim 1, wherein:
said receiving quality control means includes an electric energy control signal generating means for generating an electric energy control signal which adjusts the electric energy level of a signal to be transmitted by said first transmitting/receiving apparatus for each passband; and
said electric energy control signal is said receiving quality control signal.

5. A transmitting/receiving system as set forth in claim 1, wherein:
said receiving quality control means includes an electric energy amount information generating means for generating amount of electric energy information concerning the amount of electric energy-designating value of each passband that said second transmitting/receiving apparatus demands from a signal transmitted by said first transmitting/receiving apparatus; and
said amount of electric energy information is said receiving quality control signal.

6. A transmitting/receiving system as set forth in claim 1, wherein:
said receiving quality control means includes an error rate of receiving data-measuring means for measuring the error rate of receiving data, which is a ratio of error bits contained in receiving data per unit time, for each passband; and
a signal representing this error rate of receiving data is said receiving quality control signal.

7. A transmitting/receiving system as set forth in claim 1, wherein:
said receiving quality control means includes a number of error bits in receiving-measuring means for measuring the number of error bits in receiving, which is the number of error bits per unit time, for each passband; and
a signal representing this number of error bits in receiving is said receiving quality control signal.

8. A transmitting/receiving system as set forth in claim 1, wherein:
said first transmitting/receiving apparatus comprises a modulation means for applying a modulation according to the characteristics of a transmission way; and
said second transmitting/receiving apparatus includes a demodulation means which is conformable to said modulation means.

9. A transmitting/receiving system as set forth in claim 1, wherein:
said first transmitting/receiving apparatus comprises a modulation means, a multi-carrier method is employed as a modulation method in this modulation means; and
said second transmitting/receiving apparatus includes a demodulation means which is conformable to said modulation means.

10. A transmitting/receiving system as set forth in claim 1, wherein:
said first transmitting/receiving apparatus comprises a spread spectrum modulation means; and
said second transmitting/receiving apparatus includes a demodulation means which is conformable to said modulation means.

11. A transmitting/receiving apparatus which transmits a signal to a second transmitting/receiving apparatus or receives a signal from said second transmitting/receiving apparatus comprising:
a plurality of band-pass means having different passbands for a signal which has been received from said other transmitting/receiving apparatus,
a plurality of receiving quality detection means which are provided in response to said band-pass means and detect receiving quality information of a signal which has passed through the corresponding band-pass means; and
a receiving quality control means which generates, based on said receiving quality information provided by said plurality of receiving quality detection means, a receiving quality control signal for each passband;
a transmitting signal generating means which generates a signal including said receiving quality control signal and transmitting data, for a transmission to said other transmitting/receiving apparatus; and
said receiving quality control signal is a signal which becomes a basis for controlling the level of a signal transmitted by said other transmitting/receiving apparatus.

12. A transmitting/receiving apparatus as set forth in claim 11, wherein said receiving quality information is at least one of bit errors and a signal level.

13. A transmitting/receiving apparatus as set forth in claim 11, wherein said receiving quality control means uses said receiving quality information as said receiving quality control signal.

14. A transmitting/receiving apparatus according to claim 11, further comprising a receiving quality control signal which has been generated based on receiving quality information for each passband of said second transmitting/receiving apparatus is received and based on this receiving quality control signal, the level of a signal to be transmitted is adjusted for each passband.

15. A transmitting/receiving apparatus as set forth in claim 14, further comprising a modulation means for applying a modulation according to the characteristics of a transmission way.

16. A transmitting/receiving apparatus as set forth in claim 14, further comprising:
a modulation means; and
said modulation means including a multi-carrier modulation method.

17. A transmitting/receiving apparatus as set forth in claim 14, further comprising means for applying spread spectrum modulation to a transmitted signal.

18. A transmitting/receiving system comprising:
a first transmitting/receiving apparatus;
a second transmitting/receiving apparatus;
signals between said first and second transmitting/receiving apparatus being connectable on a transmission way;
means for modulating a first transmitted signal from said first transmitting/receiving apparatus;
at least first and second band-pass means in said second transmitting/receiving apparatus;
said at least first and second band-pass means including signal-assessment means for determining a quality of a signal received in its own bandpass;
means in said second transmitting/receiving apparatus for transmitting a measure of said quality of signal in each of said passbands through said transmission way to said first transmitting/receiving apparatus; and
means in said first transmitting/receiving apparatus for controlling transmission in said first and second passbands in response to said quality of signal in said first and second passbands.

19. A transmitting/receiving system according to claim 18, wherein said apparatus for controlling transmission includes apparatus for controlling an electrical quantity in each of said first and second passbands.
